# EUROPEAN PATENT APPLICATION

(11) **EP 4 574 596 A1**
(43) Date of publication of application: **25.06.2025**
(21) Application number: 24220096.2
(22) Date of filing: 16.12.2024
(51) Int. Cl.: B60T 15/20, B60T 15/22, B60T 17/04, B60T 17/00

(54) **DEVICE FOR CONTROLLING THE BRAKING OF A TRAILER**

(30) Priority: 18.12.2023 IT 202300027060
(71) Applicant: Slanzi Oleodinamica S.r.l., 42017 Novellara (IT)
(72) Inventor: VENTURI, Luca, 42017 Novellara (RE) (IT); ANNONI, Matteo, 42017 Novellara (RE) (IT)
(74) Representative: Locatelli, Marco Mario

(57) **Abstract**

The device (1) for controlling the braking of a trailer, comprises:
a first female joint (2) connectable to a source of a work fluid at a first pressure and comprising a tubular body (5) defining a passage channel (6) of a work fluid and valve means (7) housed within said tubular body (5) and movable between an open position and a closed position;
a control line (3) communicating with the first female joint (2) and connectable to the braking system of a trailer,
a ring nut (8) associated with the tubular body (5) in a sliding manner and movable between a securing position and a release position;
wherein the first female joint (2) comprises at least one coupling element (11) associated with the tubular body (5) in a sliding manner and defining a transfer channel (12) of the work fluid communicating with said passage channel (6) downstream of the valve means (7), the coupling element (11) being connected to the control line (3),
and wherein the coupling element (11) is mechanically connected to the ring nut (8) and is movable between a home configuration and an emergency configuration.

## Description

### Technical Field

The present invention relates to a device for controlling the braking of a trailer.

### Background Art

To date, the towing vehicles are connected to their trailers by means of a connecting device which allows their respective braking systems to be set in communication with each other, so that the braking of the towing vehicle operated by the operator also causes braking of the towed trailer.

The braking system of the trailer is therefore driven by the braking system of the tractor in order to synchronize the braking forces operating thereon. Specifically, the connecting device between the towing vehicle and the relevant trailer comprises a pair of female joints associated with the trailer and intended to receive corresponding male joints connected to the towing vehicle.

More specifically, there is a first female joint communicating with a control line which can be connected to the trailer's braking system and a second female joint communicating with an additional line adapted to command the parking and/or automatic brake of the trailer itself.

The control line and the additional line, generally consisting of hoses adapted to carry a work fluid (e.g., pressurized oil), communicate with a valve (so-called "brake valve on the trailer") adapted to adjust the outflow of the work fluid towards the braking line and towards the automatic and/or parking brake.

It may happen that, under emergency situations, due to maneuvering errors or drawbar fastening errors, the trailer becomes detached from the towing vehicle, thus causing the aforementioned hoses to tension. Should the distance between the trailer and the towing vehicle increase further, this may result in the break of the hoses.

It is easy to appreciate how this condition results in considerable drawbacks, due both to the spillage of the work fluid on the ground and the time and cost required to restore the fluid-operated and electrical connections as well as normal operational functions.

These emergency situations are taken into account by the current European regulations, which are aimed at ensuring safe operation even under emergency situations and avoiding undesirable oil spills on the ground.

### Description of the Invention

The main aim of the present invention is to devise a device for braking trailers which allows preventing at least one of the lines connecting the female joints to the trailer-brake valve from breaking as a result of excessive and unwanted movement of the trailer away from the towing vehicle.

Within this aim, one object of the present invention is to prevent oil spillage on the ground as a result of unwanted detachment of the fluid-operated lines connecting the female joints to the trailer-brake valve.

Another object of the present invention is to minimize the time required to restore the functionality of the trailer's braking system as a result of an unwanted detachment of the trailer from the towing vehicle.

Another object of the present invention is to devise a device for controlling the braking of a trailer which allows the drawbacks of the prior art to be overcome in compliance with the relevant European regulations.

The aforementioned objects are achieved by this device for controlling the braking of a trailer according to claim 1.

### Brief Description of the Drawings

Other characteristics and advantages of the present invention will become more apparent from the description of a preferred, but not exclusive, embodiment of a device for controlling the braking of a trailer, illustrated by way of an indicative, yet non-limiting example in the accompanying tables of drawings in which:

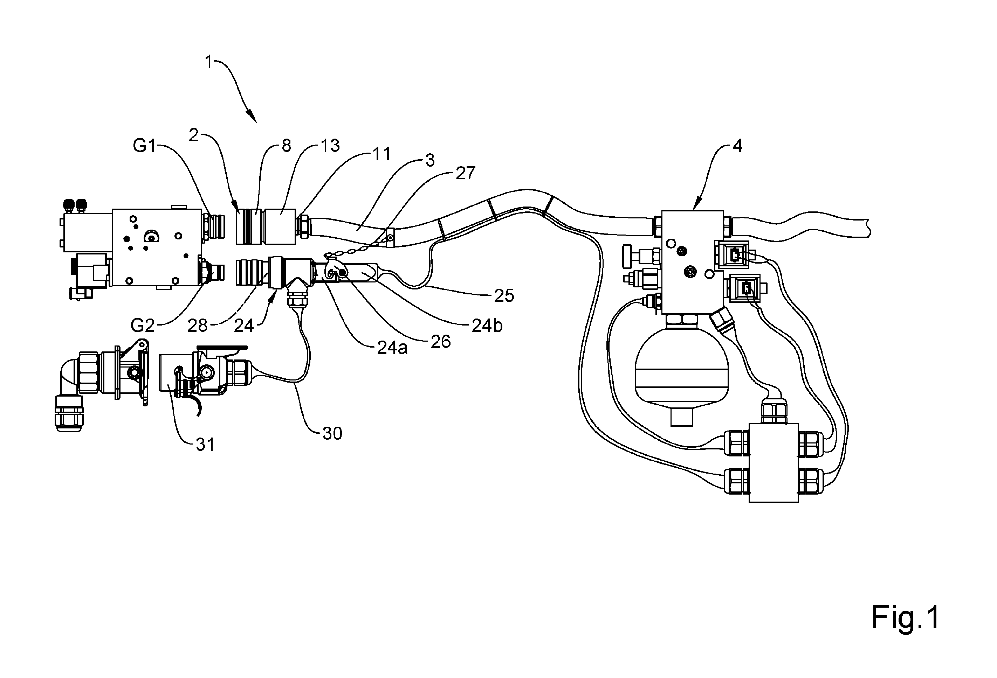

Figure 1 is a schematic representation of a device for controlling the braking of a trailer according to the invention, in the disengagement configuration from the respective male joints associated with the towing vehicle;

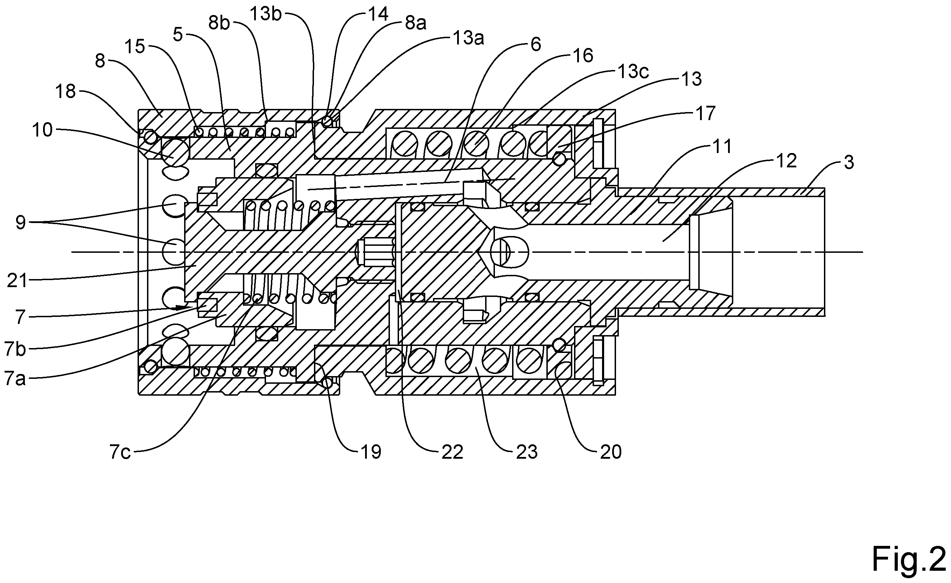

Figure 2 is a section of the first female joint of the device in Figure 1;

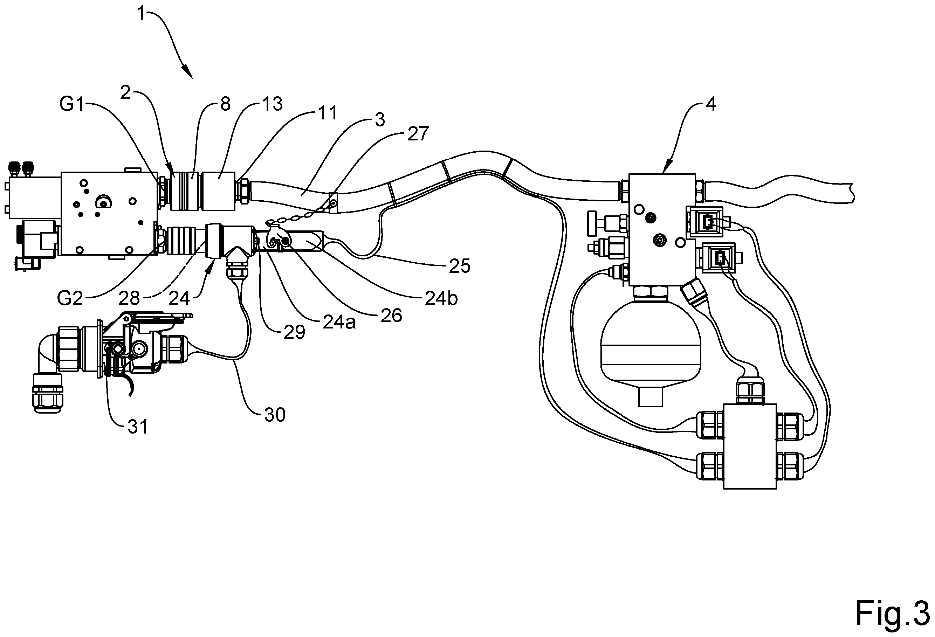

Figure 3 is a schematic representation of the device in Figure 1, in the engagement configuration with the respective male joints associated with the towing vehicle;

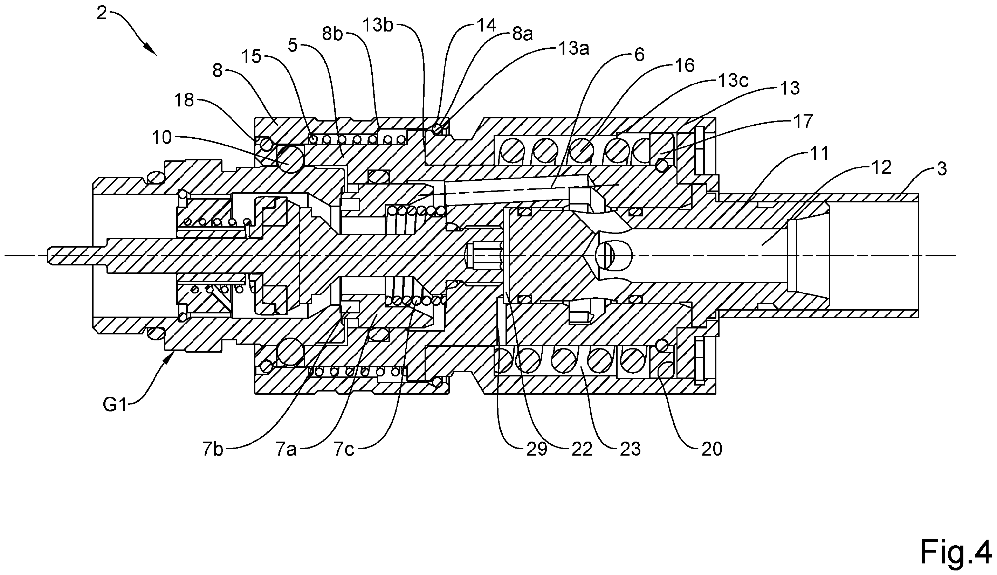

Figure 4 is a section of the first female joint of the device in Figure 3;

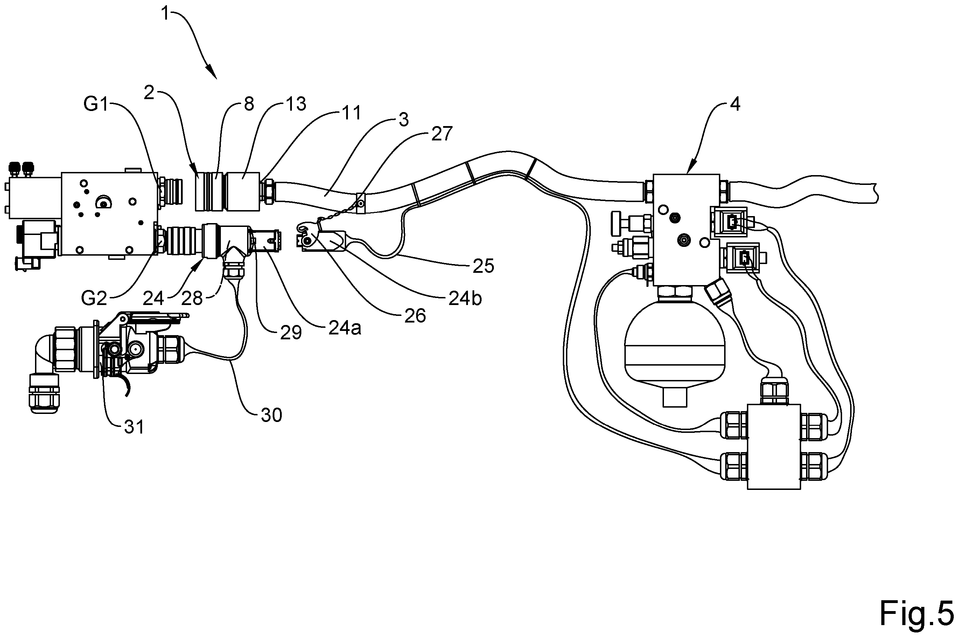

Figure 5 is a schematic representation of the device in Figure 1, in the emergency configuration;

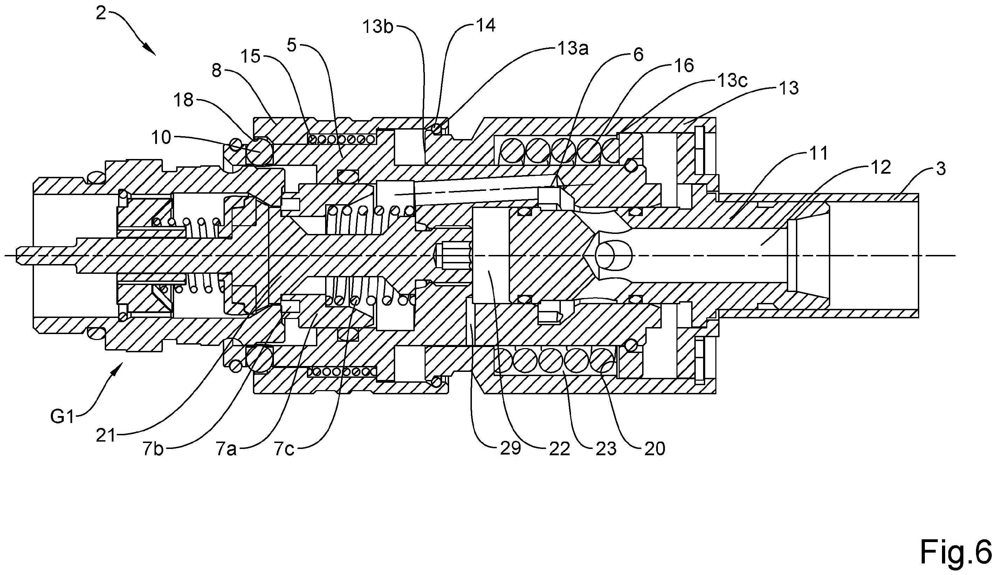

Figure 6 is a section of the first female joint of the device in Figure 5.

### Embodiments of the Invention

With particular reference to these figures, reference numeral 1 globally denotes a device for controlling the braking of a trailer.

The device 1 comprises a first female joint 2 associated with a trailer and a control line 3 associated with the first female joint 2 and connectable to the braking system of the trailer itself. The first female joint 2 is intended to receive a first male joint G1 associated with the towing vehicle and connectable to one source of a work fluid, e.g., oil, at a first pressure. As known to the engineer in the field, the control line 3 is set in communication with the trailer's braking system via a trailer-brake valve 4.

Appropriately, the control line 3 consists of a hose of the flexible type.

The first female joint 2 comprises a tubular body 5 defining a passage channel 6 of a work fluid and valve means 7 housed within the tubular body 5 and movable between an open position and a closed position to allow and prevent, respectively, the outflow of the work fluid through the passage channel itself.

The device 1 then comprises a ring nut 8 associated with the tubular body 5 in a sliding manner and movable between a securing position, wherein it prevents the first male joint from being inserted/extracted, and a release position, wherein it allows the first male joint to be inserted/extracted.

As known, the tubular body 5 has, at its end portion facing, in use, the first male joint G1, a plurality of radially-arranged through seats 9 and within which the balls 10 are housed. With the ring nut 8 in the securing position, the balls 10 protrude within the tubular body 5 thus preventing the first male joint G1 from being inserted or, if the latter was already inserted, from being extracted. In turn, the ring nut 8 has recesses 18 which are arranged, in the release position, substantially aligned with the seats 9, thus allowing the balls 10 to be raised and the first male joint G1 to be inserted/extracted.

According to the invention, the first female joint 2 comprises at least one coupling element 11 associated with the tubular body 5 in a sliding manner and defining a transfer channel 12 of the work fluid communicating with the passage channel 6 downstream of the valve means 7, where the coupling element 11 is connected to the control line 3.

Also according to the invention, the coupling element 11 is mechanically connected to the ring nut 8 and is movable between a home configuration, wherein the ring nut 8 is free to move between the securing position and the release position, and an emergency configuration, wherein it drags the ring nut 8 to the release position as a result of the force exerted thereon by the control line 3.

Preferably, the device 1 comprises a guiding element 13 fitted externally on the tubular body 5 and locked together with the coupling element 11, where the guiding element 13 interacts with the ring nut 8 to drag it towards the release position as a result of the displacement of the coupling element 11 towards the emergency configuration.

More particularly, the guiding element 13 has an abutment surface 13a which interacts, when the coupling element 11 is in the home position and the ring nut 8 is in the securing position, with a first stop surface 8a defined by the ring nut 8. In the embodiment shown in the figures, the abutment surface 13a interacts with the first stop surface 8a by interposition of an O-ring 14.

Advantageously, the device 1 comprises first elastic means 15, of the type of a coil spring, adapted to counteract the displacement of the ring nut 8 towards the release position and second elastic means 16 adapted to counteract the displacement of the guiding element 13 towards the emergency position.

More particularly, the first elastic means 15 are positioned between the ring nut 8 and the tubular body 5 and the second elastic means 16 are positioned between the guiding element 13 and a fixed abutment body 17. In the embodiment shown in the figures, the second elastic means 16 are of the type of a coil spring having one end resting on the guiding element 13 and the opposite end resting on the abutment body 17, integral with the tubular body 5.

When the force exerted on the coupling element 11 as a result of the tensioning of the control line 3, and transmitted to the guiding element 13, is greater than the sum of the equivalent force exerted by the first elastic means 15 and by the second elastic means 16, both the displacement occur of the guiding element 13 from the home configuration to the emergency configuration and also the displacement of the ring nut 8 from the securing position to the release position.

Preferably, the ring nut 8 also has a second stop surface 8b adapted to interact with the tubular body 5 in its displacement towards the securing position. Thus, the first stop surface 8a and the second stop surface 8b define the end-of-stroke positions of the ring nut 8.

Advantageously, the guiding element 13 has a first resting surface 13b adapted to interact, in its displacement towards the home configuration, with a first fixed counter-stop surface 19 and a second resting surface 13c adapted to interact, in its displacement towards the emergency configuration, with a second fixed counter-stop surface 20. The resting surfaces 13b, 13c then define the end-of-stroke position of the guiding element 13.

Particularly, the valve means 7 comprise a movable element 7a supporting a gasket 7b and movable between the closed position and the open position counteracting further elastic means 7c. The first female joint 2 comprises one abutment element 21 associated integral with the tubular element 5 and adapted to interact on one side with the gasket 7b, in the closed position of the movable element 7a, and on the other side with the first male joint G1. As a result of the insertion of the first male joint G1 and of the interaction thereof with the abutment element 21, the movable element 7a is pushed to the open position thus allowing the passage of the work fluid within the passage channel 6.

The coupling element 11 is associated with the tubular element 5 in a sliding and sealed manner, between the coupling element 11 and the tubular element 5 being defined an inner chamber 22 isolated by sealing from the passage channel 6 and communicating with the outside. The connection of the inner chamber 22 with the outside enables the proper displacement of the coupling element 11 even in the presence of minimal hydraulic leakage from the sealing elements, thus ensuring that its movement is subject only to the force exerted by the control line 3.

In more detail, the second elastic means 16 are housed within an annular chamber 23 positioned between the guiding element 13 and the tubular body 5 and communicating with the inner chamber 22 via a meatus 29, where such annular chamber 23 is set in communication with the external environment. Appropriately, the coupling element 11 has no thrust surfaces on which the work fluid operates, so it is not subject to any axial force. Therefore, the coupling element is insensitive to the inner pressure of the work fluid and its displacement subject only to the force exerted by the second elastic means 16.

The device 1 also comprises, then, a second female joint 24 communicating with an additional line 25 adapted to control the automatic and/or parking brake of the trailer and intended to receive a second male joint G2 of the towing vehicle connectable to a source of a work fluid at a second pressure.

As known to the engineer in the field, the additional line 25 is set in communication with the automatic and/or parking brake of the trailer via the trailer-brake valve 4. More specifically, when the pressure of the work fluid coming from the second male joint G2 exceeds a predefined value, generally of between 15 bar and 35 bar, the additional line 25 commands the switching of the trailer-brake valve 4 so as to supply the automatic and/or parking brake in a fluid-operated manner, thus releasing it. Conversely, as long as the pressure of the work fluid remains below the predefined value, the automatic and/or parking brake remains activated.

Preferably, the second female joint 24 comprises a first portion 24a connectable to the second male joint G2 and a second portion 24b associated with the first portion 24a in a removable manner and communicating with the additional line 25. More particularly, the second female joint 24 comprises temporary fastening means 26 for temporarily fastening the second portion 24b to the first portion 24a movable between an engagement position, wherein the second portion 24b is fastened to the first portion 24a, and a disengagement position, wherein the second portion 24b is released from the first portion 24a. In the disengagement position, therefore, the second portion 24b is separable from the first portion 24a, while, in the engagement position, the second portion 24b is bound to the first portion 24a.

Appropriately, the fastening means 26 are mechanically connected to the control line 3 and are movable from the engagement position to the disengagement position as a result of the tensioning of the control line itself.

Advantageously, the additional line 25 is mechanically connected to the control line 3 and the fastening means 26 are displaced from the engagement position to the disengagement position before the additional line 25 is put into tension as a result of the tensioning of the control line 3. In more detail, the additional line 25 is of the flexible type (e.g., consisting of a multi-core electrical cable) and constrained to the control line 3 so that it is put into tension as a result of a linear displacement of a predefined magnitude of the control line itself, and the fastening means 26 are connected to the control line 3 by means of a linking element 27, of an inextensible type, having shorter length than said linear displacement of a predefined magnitude. In this way, the linking element 27 controls the displacement of the fastening means 26 from the engagement position to the disengagement position before the additional line 25 is put into tension, thus preventing it from breaking.

Preferably, the first portion 24a defines an additional channel 28 for the passage of the work fluid to the second pressure and pressure sensing means 29 along the additional channel 28. The sensing means 29, e.g. of the type of a pressure transducer or a pressure switch, are adapted to send an electrical signal when the pressure of the work fluid along the additional channel 28 achieves a predefined value.

In this embodiment, the additional line 25 is of the electrical type and is electrically connected to the sensing means 29. Specifically, the second portion 24b comprises electrical connection means of the additional line 25 to the sensing means 29, so the electrical connection between the additional line 25 and the sensing means 29 is interrupted as a result of the detachment of the second portion 24b from the first portion 24a.

Appropriately, the device 1 comprises at least one electrical line 30 connected to the second female joint 24 and provided with an electrical connector 31 adapted to be coupled to a corresponding electrical connector of the towing vehicle. The electrical line 30 is configured to exchange at least one electrical signal with the valve means 7 via the additional electrical line 25.

In other words, the additional line 25 electrically connects the valve means 7 to the sensing means 29 and to the electrical line 30.

The operation of the device according to the invention is as follows.

As known to the technician in the field, in order to carry out the insertion of the first male joint G1 within the first female joint 2, it is first necessary to bring the ring nut 8 to the release position, wherein the balls 10 are pushed inside the relevant recesses 18 as a result of the insertion of the first male joint itself. Once the first male joint G1 has been introduced into the first female joint 2, the ring nut 8 is returned to the securing position so that the balls 10, entering the respective grooves defined on the first male joint G1, prevent them from coming out.

As a result of the insertion of the first male joint G1, the valve means 7 are pushed to the open position so as to allow the work fluid to flow out through the passage channel 6 and therefrom along the control line 3 passing through the coupling element 11.

At this phase, i.e. under normal operating condition, the coupling element 11 remains in the home configuration.

If, an extraordinary situation occurs as a result of which the trailer moves excessively away from the towing vehicle, that is, by a greater distance than the length of the control line 3, the coupling element 11 receives a direct force away from the tubular body 5 and thus moves with respect thereto.

More specifically, as a result of the tensioning of the control line 3, the coupling element 11 shifts with respect to the tubular body 5, dragging the guiding element 13 with it (provided that the force exerted is sufficient to overcome the force of the second elastic means 16) and displacing from the home configuration to the emergency configuration.

As a result of this displacement, as a result of the interaction of the abutment surface 13a with the first stop surface 8a, the guiding element 13 drags the ring nut 8 towards the release position (counteracting the first elastic means 15), upon reaching which the first female joint 2 separates from the first male joint G1.

It follows, therefore, that the fact of appropriately calibrating the second elastic means 16 results in the detachment of the first female joint 2 from the first male joint G1 when a force of a predefined value is exerted on the coupling element 11, so as to prevent the components involved from being broken.

At the same time, as a result of the tensioning of the control line 3 and of the subsequent detachment of the first female joint 2, the linking element 27 causes the fastening means 26 to displace from the engagement position to the disengagement position, thus allowing the separation of the second portion 24b, which then follows the trailer, from the first portion 24a, which instead remains connected to the towing vehicle. Such a separation results in the electrical disconnection between the additional line 25 and the sensing means 29 and the consequent activation of the automatic and/or parking brake.

It has, in practice, been ascertained that the described invention achieves the intended objects and the fact is particularly emphasized that the device covered by the present invention makes it possible to prevent the components connecting the trailer to the towing vehicle from being broken, and in particular of the hoses traversed by the work fluid, as a result of an unwanted away movement of the trailer itself.

In particular, by appropriately calibrating the second elastic means, it is possible to determine the limit value of the force exerted by the control line beyond which the disconnection of the first female joint from the relevant first male joint is commanded.

As a result of the detachment of the first female joint from the relevant first male joint, an unwanted spillage of the work fluid on the ground is also avoided. Again, making the second female joint into two mutually separable portions allows the integrity thereof to be preserved following the unwanted away movement of the trailer.

Thus, the functionality of the connecting joint between the towing vehicle and the trailer can be restored quickly.

Last but not least, the transformation of the pressure signal coming from the second male joint into an electrical signal that is transmitted from the additional line to the trailer-brake valve makes it possible to limit the risk of oil leakage in the event of a break and to simplify the constructive embodiment of the device.

## Claims

1. Device (1) for controlling the braking of a trailer, comprising:
- a first female joint (2) intended to receive a first male joint of the towing vehicle connectable to a source of a work fluid at a first pressure, wherein said first female joint (2) comprises a tubular body (5) defining a passage channel (6) of a work fluid and valve means (7) housed within said tubular body (5) and movable between an open position and a closed position to allow and prevent the outflow of the work fluid through said passage channel (6), respectively;
- a control line (3) communicating with said first female joint (2) and connectable to the braking system of a trailer,
- a ring nut (8) associated with said tubular body (5) in a sliding manner and movable between a securing position, wherein it prevents the first male joint from being inserted/extracted, and a release position, wherein it allows the insertion/extraction of the first male joint;
**characterized by** the fact that said first female joint (2) comprises at least one coupling element (11) associated with said tubular body (5) in a sliding manner and defining a transfer channel (12) of the work fluid communicating with said passage channel (6) downstream of said valve means (7), said coupling element (11) being connected to said control line (3),
and by the fact that said coupling element (11) is mechanically connected to said ring nut (8) and is movable between a home configuration, wherein said ring nut (8) is free to move between the securing position and the release position, and an emergency configuration, wherein it drags said ring nut (8) to the release position as a result of the force exerted thereon by said control line (3).

2. Device (1) according to claim 1, **characterized by** the fact that it comprises a guiding element (13) fitted externally on said tubular body (5) and locked together with said coupling element (11) and by the fact that said guiding element (13) interacts with said ring nut (8) to drag it towards the release position as a result of the displacement of said coupling element (11) towards the emergency configuration.

3. Device (1) according to claim 2, **characterized by** the fact that said guiding element (13) has an abutment surface (13a) which interacts, with said coupling element (11) in the home position and said ring nut (8) in the securing position, with a first stop surface (8a) defined by said ring nut (8).

4. Device (1) according to claim 2 or 3, **characterized by** the fact that it comprises first elastic means (15) adapted to counteract the displacement of said ring nut (8) towards the release position and second elastic means (16) adapted to counteract the displacement of said guiding element (13) towards the emergency position.

5. Device (1) according to claim 4, **characterized by** the fact that said first elastic means (15) are positioned between said ring nut (8) and said tubular body (5) and by the fact that said second elastic means (16) are positioned between said guiding element (13) and a fixed abutment body (17).

6. Device (1) according to claim 4 or 5, **characterized by** the fact that the equivalent force exerted by said second elastic means (16) on said guiding element (13) is greater than the equivalent force exerted by said first elastic means (15) on said ring nut (8).

7. Device (1) according to one or more of the preceding claims, **characterized by** the fact that said ring nut (8) has a second stop surface (8b) adapted to interact with said tubular body (5) in its displacement towards the securing position, said first stop surface (8a) and said second stop surface (8b) defining the end-of-stroke positions of said ring nut (8).

8. Device (1) according to one or more of the preceding claims, **characterized by** the fact that said guiding element (13) has a first resting surface (13b) adapted to interact with a first counter-stop surface (19) fixed in the displacement towards the home configuration and a second resting surface (13c) adapted to interact with a second counter-stop surface (20) fixed in the displacement towards the emergency configuration, said resting surfaces (13b, 13c) defining the end-of-stroke positions of said guiding element (13).

9. Device (1) according to one or more of the preceding claims, **characterized by** the fact that said coupling element (11) is associated with said tubular body (5) in a sliding sealed manner, between said coupling element (11) and said tubular body (5) being defined an inner chamber (22) isolated by sealing from said passage channel (6) and communicating with the outside.

10. Device (1) according to claim 9, **characterized by** the fact that said second elastic means (16) are housed within an annular chamber (23) positioned between said guiding element (13) and said tubular body (5) and by the fact that said annular chamber (23) is communicating with said inner chamber (22).

11. Device (1) according to one or more of the preceding claims, **characterized by** the fact that it comprises a second female joint (24) intended to receive a second male joint (G2) of the towing vehicle connectable to a source of a work fluid at a second pressure, and an additional line (25) communicating with said second female joint (24) and adapted to control the automatic and/or parking brake of the trailer,
wherein said second female joint (24) comprises a first portion (24a) connectable to said second male joint and a second portion (24b) associated with said first portion (24a) in a removable manner and communicating with said additional line (25), and by the fact that it comprises temporary fastening means (26) for temporarily fastening said second portion (24b) to said first portion (24a) movable between an engagement position, wherein said second portion (24b) is fastened to said first portion (24a), and a disengagement position, wherein said second portion (24b) is released from said first portion (24a).

12. Device (1) according to claim 11, **characterized by** the fact that said fastening means (26) are mechanically connected to said control line (3) and by the fact that they are movable from the engagement position to the disengagement position as a result of the tensioning of said control line (3).

13. Device (1) according to claim 12, **characterized by** the fact that said additional line (25) is mechanically connected to said control line (3) and by the fact that said fastening means (26) are displaced from the engagement position to the disengagement position before said additional line (25) is put into tension as a result of the tensioning of said control line (3).

14. Device (1) according to one or more of claims 11 to 13, **characterized by** the fact that said first portion (24a) comprises an additional channel (28) for the passage of a work fluid to said second pressure and pressure sensing means (29) along said additional channel (28), wherein said sensing means (29) are adapted to send an electrical signal when the pressure in said additional channel (28) achieves a predefined value, said additional line (25) being of the electrical type and being electrically connected to said sensing means (29), wherein the electrical connection between said additional line (25) and said sensing means (29) is interrupted as a result of the disconnection of said second portion (24b) from said first portion (24a).
